# EUROPEAN PATENT APPLICATION

(11) **EP 2 692 594 A2**
(43) Date of publication of application: **05.02.2014**
(21) Application number: 13178430.8
(22) Date of filing: 29.07.2013
(51) Int. Cl.: B60S 1/34

(54) **Wiper device for cleaning a vehicle window and method for fastening a wiper arm on a wiper shaft**

(30) Priority: 31.07.2012 DE 102012106979
(71) Applicant: Valeo Systèmes d'Essuyage, 78321 Le Mesnil Saint Denis (FR)
(72) Inventor: Schaeuble, Michael, 71665 VAIHINGEN/ENZ (DE)
(74) Representative: Léveillé, Christophe

(57) **Abstract**

The invention relates to a wiper device (100; 100a) for cleaning a vehicle window (1), with a wiper blade (10) arranged on a wiper arm (20; 20a), wherein the wiper arm (20; 20a) is fastened in a torque-proof manner on a wiper shaft (5) by means of a clamping piece (22; 22a), wherein a toothing region (15) is formed between the clamping piece (22; 22a) and the wiper shaft (5), wherein to form a clamping connection the clamping piece (22; 22a) cooperates with a clamping screw (27) which is arranged in a direction perpendicularly to the axis (2) of the wiper shaft (5), and wherein the wiper arm (20; 20a) is able to be fixed by means of the clamping piece (22; 22a) at differing distances from the vehicle window (1).

## Description

### Prior Art

The invention relates to a wiper device for cleaning a vehicle window in accordance with the precharacterizing clause of Claim 1 and to a method for fastening a wiper arm on a wiper shaft.

A wiper device of this type is known from US 3,433,513. In the known wiper device, the wiper arm has a clamping piece, by means of which the wiper arm can be fastened fixedly to one end of a wiper shaft so as to rotate with it. To this end, elements which have toothing systems and interact with the wiper shaft can be inserted in a positively locking manner into the clamping piece. The positioning of the wiper arm in a defined (axial) position with respect to the wiper shaft is required, in particular, in order to achieve flat contact of the wiper lip with the vehicle window in the operating position of the wiper arm. In the known wiper device, the wiper rod of the wiper arm is arranged pivotably on the clamping piece, and the clamping screw which serves for the clamping connection is always accessible from the outside independently of the position of the wiper rod. As a result, there is the problem, in particular, that the clamping screw and/or the fastening region is exposed to environmental influences, with the result that a replacement of the wiper arm on the wiper shaft, for example as a result of rust formation, is made more difficult.

Moreover, DE 10 2005 046 325 A1 from the applicant has disclosed a wiper device, in which the wiper arm is likewise connected via a clamping connection to the wiper shaft. However, the formation of the clamping connection does not take place via a clamping screw, but rather via a covering cap or a covering element which presses two limbs of a clamping piece which interacts with the wiper shaft against one another and thus forms the clamping connection. However, only limited clamping forces can be produced by means of a clamping connection of this type.

### Disclosure of the Invention

Proceeding from the prior art which is shown, the invention is based on the object of developing a wiper device for cleaning a vehicle window in accordance with the precharacterizing clause of Claim 1 in such a way that firstly particularly secure mounting of the wiper arm on the wiper shaft is made possible, that is to say the clamping connection makes the transmission of particularly high torques possible, and that secondly the fastening element (clamping screw) is arranged in a protected manner, in order if required to make simple replacement or simple dismantling of the wiper arm possible.

In a wiper device for cleaning a vehicle window having the features of Claim 1, this object is achieved substantially by the fact that the clamping screw, in particular in an operating position of the wiper blade, in which the latter is aligned parallel to the vehicle window, is covered at least on its face sides by a covering element of the wiper arm. In other words, this means that the invention uses a clamping screw which makes it possible to produce relatively high clamping forces and therefore relatively high torques to be transmitted, and secondly to arrange the clamping screw in a protected manner in the operating state of the wiper device, for which purpose a covering element of the wiper arm serves.

Advantageous developments of the wiper device according to the invention for cleaning a vehicle window are specified in the subclaims. All combinations of at least two features which are disclosed in the claims, the description and/or the figures fall within the scope of the invention.

The covering elements can be configured in a variety of ways. Specifically, two variants are proposed according to the invention, in which the covering element is either formed as a separate covering cap which is arranged pivotably on the clamping piece or secondly is formed by at least one covering region of the wiper arm, which covering region can be pivoted together with the wiper arm. Moreover, both solutions cover the clamping screw completely, with the result that the latter is protected against environmental influences in a particularly satisfactory manner.

As has already been explained at the outset, it is required to arrange the wiper arm at a defined (vertical) position on the wiper shaft. To this end, spacer elements are usually used which are positioned between the vehicle window and the wiper arm and are removed after the fixing of the wiper arm. Different spacer elements are therefore possibly required depending on the vehicle type or specific application, in order to set the correct spacing. In one very particularly preferred refinement of the invention, it is therefore provided that the covering cap or the at least one covering region of the wiper arm can be pivoted into a mounting position in order to set a defined vertical position of the wiper arm on the wiper shaft, in which mounting position the covering cap or the at least one covering region is arranged in abutting contact on the vehicle window. A refinement of this type has the advantage that the use of spacer pieces can be dispensed with completely, since the defined, that is to say correct, spacing of the wiper arm with respect to the vehicle window in the mounting position can be set merely by the shaping or the geometric dimensioning of the covering cap or the covering region on the wiper arm.

In order to assist the operator when setting the correct spacing of the wiper arm from the vehicle window, during which assistance said operator detects the correct position simply, it is provided in a further refinement of the invention that the mounting position of the wiper arm is defined by stop elements, which delimit the pivoting angle of the covering cap or of the wiper arm. As a result, it is sufficient if the operator pivots the covering cap or the wiper arm to such an extent that the covering cap or the wiper arm comes into an operative connection with the stop.

In order to generate a defined pressing force of the wiper blade on the vehicle window, a tension spring is usually used which is arranged on one side in the region of the wiper arm and on the other side in the region of the wiper shaft or of an auxiliary element which is connected to the wiper shaft. In order to make particularly simple fastening of the tension spring in the region of the wiper shaft possible, in which the use of additional elements can be dispensed with, it is provided in a further refinement of the invention that, for the production of a contact force of the wiper blade on the vehicle window, a tension spring is provided, and that the tension spring is fastened with a fastening section on the clamping screw. As a result, the clamping screw serves firstly for the torque-proof fastening of the wiper arm on the wiper shaft, and secondly for anchoring or fastening the tension spring.

It is usually provided to provide a wiper device with a device for feeding a washing fluid, in order to make cleaning of the vehicle window possible. Classically, this takes place via a spray nozzle which is arranged in the region of a vehicle body part and, upon actuation, wets the vehicle window with the washing fluid. A spray nozzle of this type which is arranged in the region of the vehicle body can be dispensed with if a feed means is provided in the wiper shaft in the form of a feed tube for a washing fluid, which feed tube is connected hydraulically to the wiper blade. A feed means of this type serves to supply spray nozzles which are arranged in the region of the wiper blade with the washing fluid. Moreover, a solution of this type has the particular advantage that the washing fluid can be sprayed onto the vehicle window immediately in front of the wiper blade, the result of which is minimization of the consumption of washing fluid and minimization of the sight obstruction for the driver.

In one structurally preferred refinement of the feed means of the washing fluid via the wiper shaft, it is provided that the clamping piece has fluid ducts for supplying the washing fluid to the wiper blade. As a result, no separate elements are required which would otherwise possibly increase the structural complexity, the space requirement and the manufacturing outlay.

The invention also comprises a method for fastening a wiper arm on a wiper shaft using a wiper device according to the invention, wherein, in order to position the wiper arm on the toothing region, a covering cap or the wiper arm is pivoted into a mounting position, in which the covering cap or the wiper arm bears with at least one covering region against the vehicle window, wherein in this position the clamping screw is tightened, and wherein finally the covering cap or the wiper arm is pivoted into an operating position, in which the clamping screw is covered by the covering cap or by the at least one covering region of the wiper arm. A method of this type according to the invention for fastening the wiper arm on a wiper shaft has the particular advantage that no special spacer elements or the like are required, in order to arrange the wiper arm at the correct spacing from the vehicle window.

Further advantages, features and details of the invention result from the following description of preferred exemplary embodiments and using the drawing, in which:
- Fig. 1: shows the constituent parts of a first wiper device according to the invention in an exploded illustration,
- Fig. 2: shows the constituent parts of the wiper device according to Fig. 1 in a perspective bottom view,
- Fig. 3: shows a section through a mounted wiper device in the region of the connecting point between a wiper shaft and a wiper arm,
- Fig. 4: shows, in plan view and in section in accordance with the line A-A, the wiper device according to Fig. 1 in the operating position of the wiper arm,
- Fig. 5: shows, in plan view and in section in accordance with the line A-A, the wiper device according to Fig. 1 in the mounting position of the wiper arm on the wiper shaft,
- Fig. 6: shows a perspective view of a second mounted wiper device according to the invention,
- Fig. 7: shows a longitudinal view through the wiper device according to Fig. 6,
- Fig. 8: shows a cross section through the wiper device according to Fig. 6, and
- Figs 9 and 10: shows the wiper device according to Fig. 6 in the mounting position of the wiper arm on the wiper shaft and in the operating position of the wiper arm.

Identical elements or elements with an identical function are provided with the same reference numerals in the figures.

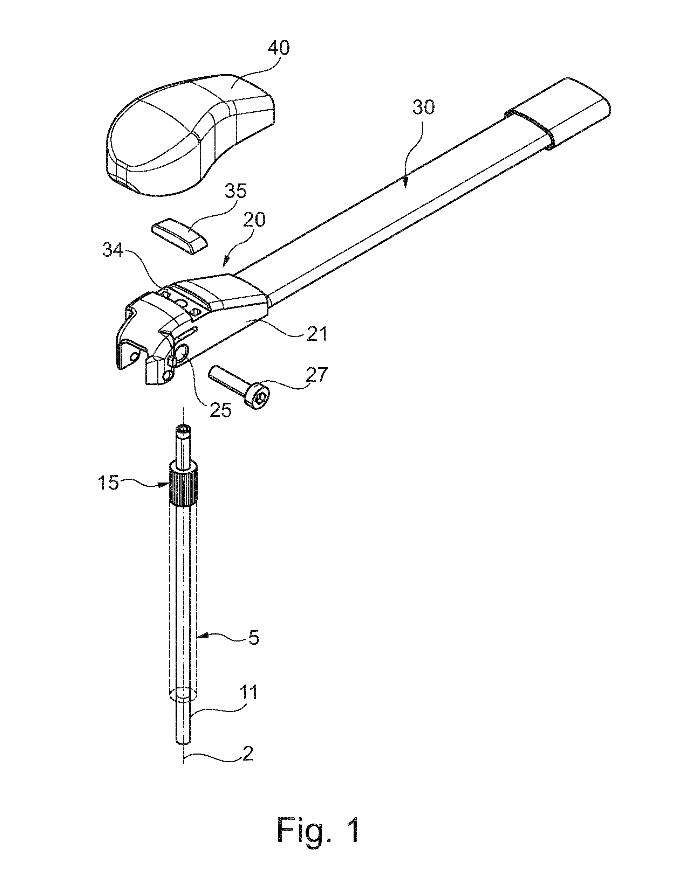

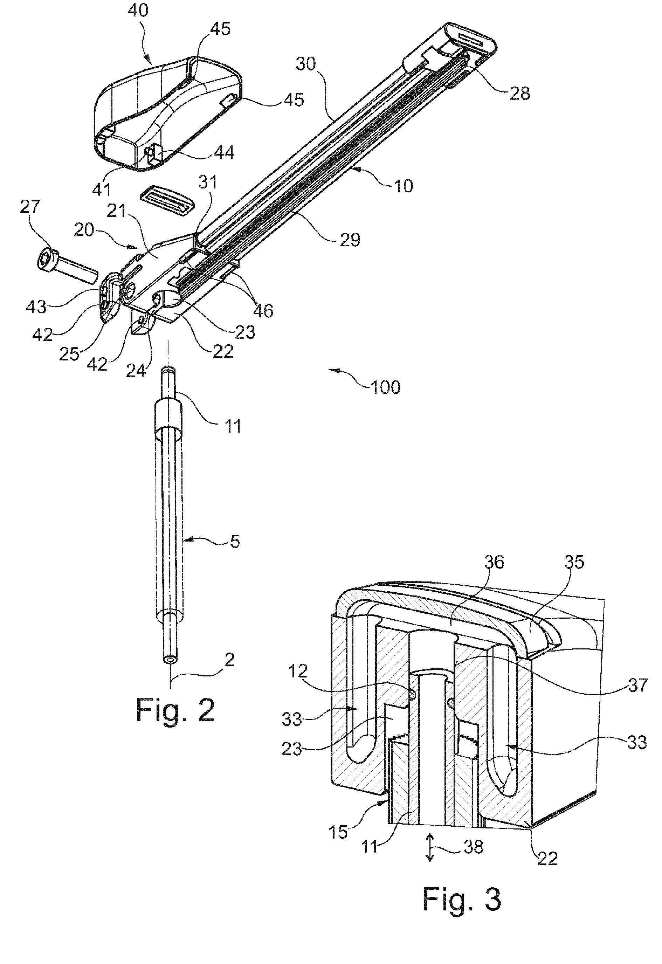

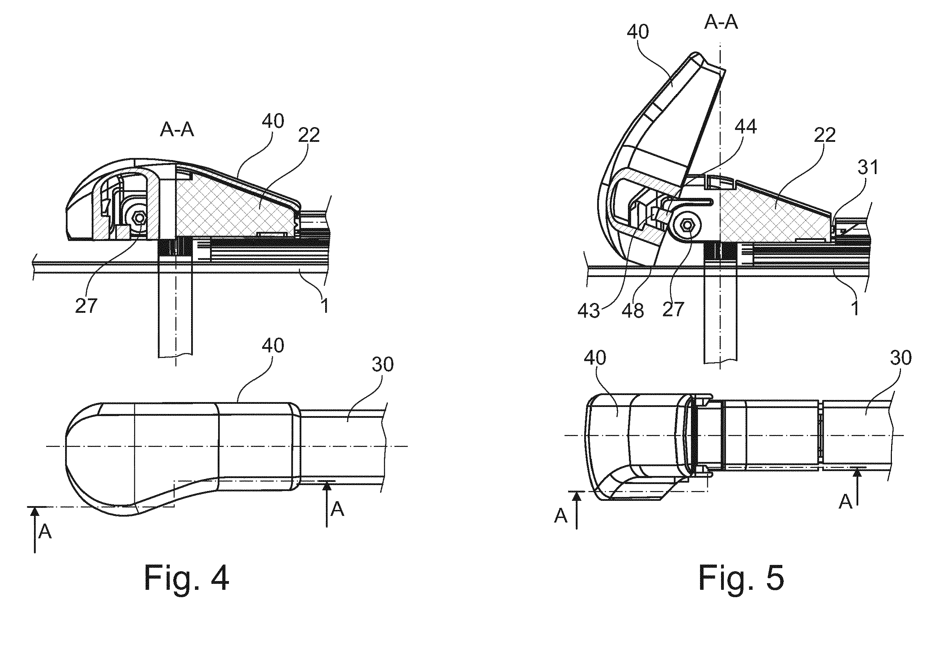

Figs 1 and 2 show the essential constituent parts of a first wiper device 100 according to the invention. The wiper device 100 serves preferably but not exclusively for cleaning a vehicle window 1 which can be seen in Figs 4 and 5 and is situated in the rear region of the vehicle.

The wiper device 100 comprises a wiper shaft 5 which can be rotated to and fro in a longitudinal axis 2 by means of a wiper drive (not shown) and on which a wiper blade 10 can be fastened in a torque-proof manner via a wiper arm 20. The wiper shaft 5 is configured as a hollow shaft and, in its interior, has a feed means which is arranged in the longitudinal axis 2 for a washing fluid in the form of a washing fluid tube 11. The washing fluid tube 11 protrudes beyond that end of the wiper shaft 5 which faces the wiper arm 20 and, in an annular groove, carries a sealing ring 12 which can be seen in Fig. 3. Moreover, on its end region which faces the wiper arm 20, the wiper shaft 5 has a longitudinal toothing system on the outer circumference, which longitudinal toothing system forms a toothing region 15.

The wiper blade 10 is fastened on the wiper arm 20 which comprises a connecting element 21 on the side which faces the wiper shaft 5. As can be seen, in particular, using Fig. 2, the connecting element 21 has, in its interior, a block-shaped clamping body 22 with a receiving hole 23, the diameter of which is adapted to the diameter of the toothing region 15 on the wiper shaft 5. On the side which faces away from the wiper blade 10, the clamping body 22 has a slot 24, in the region of which a transverse hole 25 is also formed which runs perpendicularly with respect to the longitudinal axis 2 of the wiper shaft 5. The transverse hole 25 serves to receive and fasten a clamping screw 27 in such a way that, upon tightening of the clamping screw 27, a clamping connection is formed between the receiving hole 23 and the toothing region 15, in which clamping connection that region of the receiving hole 23 which is composed of plastic is braced with the toothing region 15 of the wiper shaft 5 and forms a torque-proof fastening of the wiper arm 20 on the wiper shaft 5.

As can be seen, in particular, using Fig. 2, the wiper blade 10 comprises a wiper rubber 28 with a wiper lip 29 which bears against the vehicle window 1 in the operating position of the wiper blade 10. In relation to the longitudinal direction of the wiper rubber 28, the wiper rubber 28 is covered by a covering body 30, in the region of which spray openings (not shown) for applying the washing fluid are also formed and arranged. To this end, the covering body 30 has washing fluid ducts which run in the longitudinal direction of the covering body 30 and into which washing fluid stubs 31 protrude which can be seen merely in Figs 2 and 5 and are formed on the clamping body 22.

As can be seen, in particular, using Fig. 3, the hydraulic connection between the washing fluid tube 11 and the wiper blade 10 or the washing fluid stub 31 takes place via feed ducts 33 which are formed in the clamping body 22. As can be seen, furthermore, two feed ducts 33 are provided which are connected to in each case one longitudinal side of the covering body 30 or to one washing fluid stub 31 which is arranged on the longitudinal side of the covering body 30. Furthermore, it can be seen using Fig. 1 that an approximately groove-shaped recess 34 which can be closed in a hydraulically tight manner by means of a covering cap 35 is arranged on the upper side of the clamping body 22. In particular, the connection between the covering cap 35 and the clamping body 22 in the region of the recess 34 is effected by an ultrasonic welded connection. As can be seen particularly clearly using Fig. 3, the covering cap 35 is configured with a further recess 36 which is a constituent part of the feed ducts 33 on the side which faces the clamping piece 22. Furthermore, it can be seen that the washing fluid tube 11 is arranged with its sealing ring 12 in a cylindrical receiving section 37 of the clamping body 22, in such a way that the sealing ring 12 is always arranged sealingly with respect to the receiving section 37 during mounting of the clamping body 22 at different heights of the toothing region 15 in accordance with the direction of the double arrow 38.

A covering cap 40 is fastened pivotably on the clamping body 22. To this end, as can be seen, in particular, using Fig. 2, the covering cap 40 has inwardly protruding bearing journals 41 of round cross section on its inner side, which bearing journals 41 protrude into corresponding bearing seats 42 of the clamping body 22. Moreover, block-shaped stop cams 43 are arranged in the clamping body 22 above the bearing seats 42, which stop cams 43 limit the movability or pivotability of the covering cap 40 in accordance with Fig. 5, in such a way that stop blocks 44 which also carry the bearing journals 41 strike against the stop cams 43 from a defined pivoting angle and prevent further pivotability of the covering cap 40.

In the operating position of the wiper blade 10, in which the wiper lip 29 of the latter is in bearing contact with the vehicle window 1, the covering cap 40 covers both the clamping body 22 and the region of the clamping screw 27 on its end sides, with the result that said clamping screw 27 is arranged such that it cannot be seen from the outside and is not accessible and is protected. To this end, the covering cap 40 has two latching lugs 45 on its inner side, which latching lugs 45 form a latching connection together with latching receptacles 46 formed in the clamping body 22 (Fig. 2).

During the mounting of the wiper arm 20 and/or the wiper blade 10, it is required to position the wiper arm 20 at a defined spacing from the vehicle window 1 and to fix it there on the wiper shaft 5. In order for it to be possible to adapt the spacing, for example, if different wiper rubbers 28 are used, the toothing region 15 is provided on the wiper shaft 5, which toothing region 15 makes it possible to fix the wiper arm 20 in different vertical or longitudinal positions by the clamping body 22 and the clamping screw 27. The setting of the correct spacing of the wiper arm 20 from the vehicle window 1 and of the correct, defined position of the wiper arm 20 on the toothing region 15 of the wiper shaft 5 takes place with the aid of the covering cap 40. Reference is made in this respect to Figs 4 and 5 which show the position of the covering cap 40 during the operating position (Fig. 4) and during the mounting position (Fig. 5) of the wiper arm 20 on the wiper shaft 5. It can be seen, in particular, that, in the case of a covering cap 40 which is pivoted into the mounting position in accordance with Fig. 5, in which the covering cap 40 is situated in its maximum pivoted position as a consequence of the stop cams 43 and the stop blocks 44, one end face 48 of the covering cap 40 bears against the vehicle window 1. The correct longitudinal position of the wiper arm 20 on the toothing region 15 of the wiper shaft 5 is defined by the bearing of the covering cap 40 against the vehicle window 1. Furthermore, it can be seen using Fig. 5 that the clamping screw 27 is also accessible from the outside in this position, that is to say an operator can tighten the clamping screw 27 in order to fix the wiper arm 20 on the wiper shaft 5. As soon as this has taken place, the covering cap 40 can be pivoted out of the mounting position which is shown in Fig. 5 into the operating position which is shown in Fig. 4, the latching lugs 45 of the covering cap 40 latching into the latching receptacles 46 in the clamping body 22.

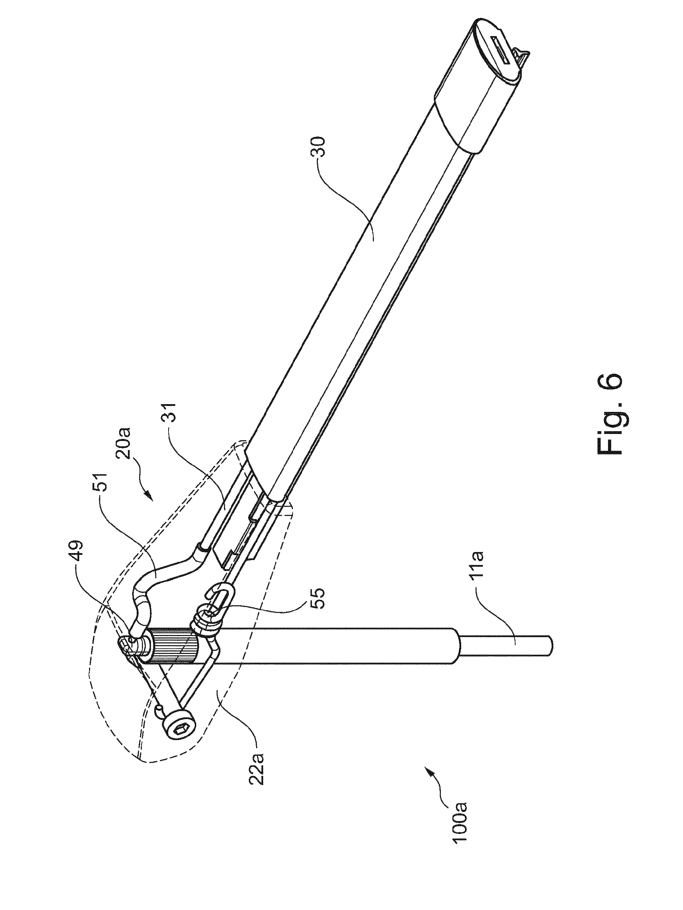

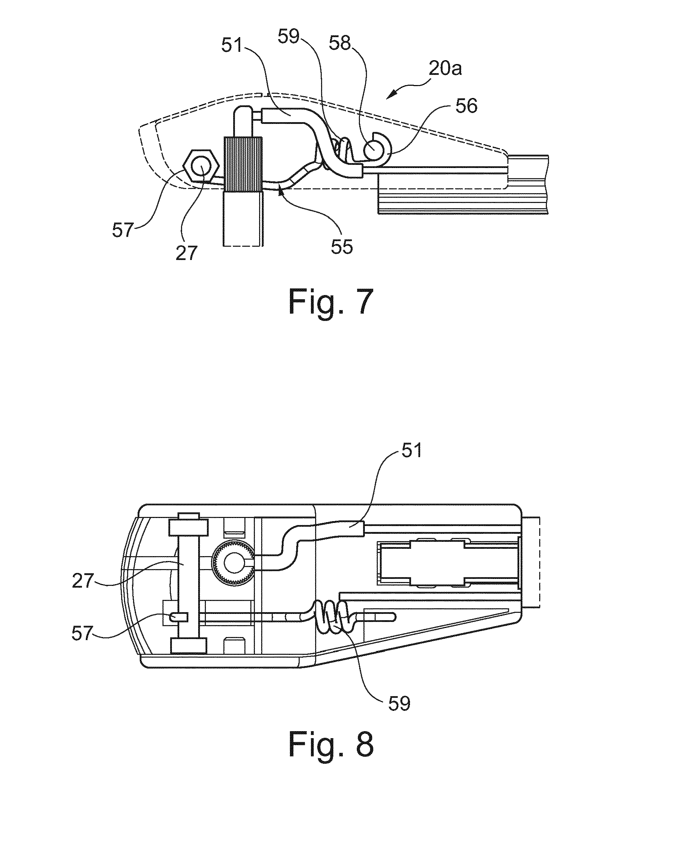

Figs 6 to 10 show a wiper device 100a which is modified with respect to Figs 1 to 5. The differences of the wiper device 100a from the wiper device 100 consist substantially in the fact that an end stub 49 is mounted on that upper side of the washing fluid tube 11 a which faces the wiper arm 20a, which end stub 49 is connected by way of a connecting hose 51 to the covering body 30 or its washing fluid stub 31. Hydraulic guidance of the washing fluid through the clamping body 21 or through a covering cap 30 therefore does not take place. Furthermore, a tension spring 55 can also be seen which, however, is also provided in a similar way in the wiper device 100. The tension spring 55 serves to generate a pressing or contact force of the wiper blade 10 on the vehicle window 1. To this end, the tension spring 55 in each case has a bent fastening section 56, 57 at its two ends, which fastening section 56, 57 is connected firstly to a fastening pin 58 which passes through the clamping body 22a and secondly to the clamping screw 27, by the corresponding fastening region 57 which is configured as a hook engaging around the clamping screw 27. Moreover, the tension spring 55 has a spring section 59 which is provided with turns between the two fastening regions 56, 57. As can be seen, in particular, using Figs 7 and 8, the tension spring 55 is arranged laterally next to the wiper shaft 5.

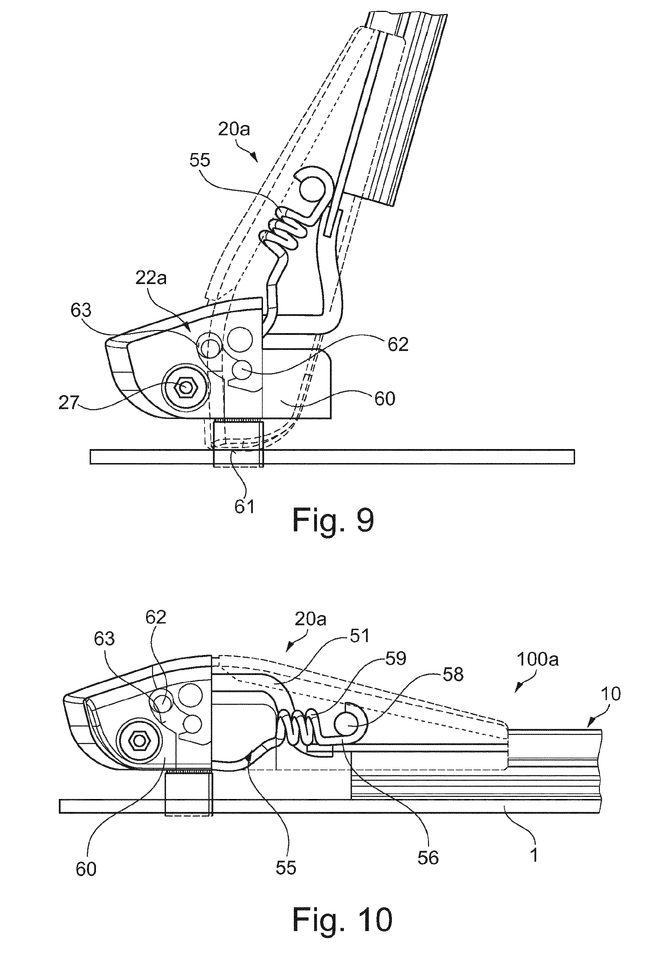

Moreover, one substantial difference between the wiper device 100 and the wiper device 100a consists in the fact that, in the wiper device 100a, there is no separate covering cap 40 as in the wiper device 100. Rather, as can be seen particularly clearly using Fig. 9, the clamping body 22a has two covering regions 60 which cover or enclose the clamping body 22a laterally. It is essential here that, in the mounting position which is shown in Fig. 9 and in which the wiper arm 20 is pivoted, for example, by an angle of approximately 75° with respect to the vehicle window 1, the two covering regions 60 bear with their closing face 61 against the vehicle window 1, in order to position the clamping body 22a in the correct vertical position with the toothing region 15 of the wiper shaft 5. It can be seen, furthermore, that, in the mounting position, the two covering regions 60 expose the clamping screw 27, that is to say the latter can be tightened or released by an operator. In contrast, in the operating position of the wiper blade 10 or of the wiper arm 20a shown in Fig. 10, the clamping screw 27 is arranged such that it is covered on its end sides by the two covering regions 60 of the wiper arm 20a. The mounting position of the wiper arm 20a is defined by stop elements which comprise at least one, preferably two, stop cams 62 which are formed on the covering regions 60 and are guided in slotted guides 63 which are formed in the clamping body 22a. As soon as the stop cams 62 strike against the boundaries of the slotted guides 63, further pivotability of the wiper arm 20a is prevented.

The wiper device 100, 100a which has been described above can be amended or modified in a wide variety of ways, without deviating from the concept of the invention.

### List of Reference Numerals

- 1: Vehicle window
- 2: Longitudinal axis
- 5: Wiper shaft

- 10: Wiper blade
- 11,11a: Washing fluid tube
- 12: Sealing ring
- 15: Toothing region
- 20,20a: Wiper arm
- 21: Connecting element
- 22,22a: Clamping body
- 23: Receiving hole
- 24: Slot
- 25: Transverse hole
- 27: Clamping screw
- 28: Wiper rubber
- 29: Wiper lip
- 30: Covering body
- 31: Washing fluid stub
- 33: Feed duct
- 34: Recess
- 35: Covering cap
- 36: Recess
- 37: Receiving section
- 38: Double arrow
- 40: Covering cap
- 41: Bearing journal
- 42: Bearing seat
- 43: Stop cam
- 44: Stop block
- 45: Latching lug
- 46: Latching receptacle
- 48: End face
- 49: End stub
- 51: Connecting hose
- 55: Tension spring
- 56: Fastening section
- 57: Fastening section
- 58: Fastening pin
- 59: Spring section
- 60: Covering region
- 61: Closing face
- 62: Stop cam
- 63: Slotted guide

- 100: Wiper device
- 100a: Wiper device

## Claims

1. A wiper device (100; 100a) for cleaning a vehicle window (1), with a wiper blade (10) arranged on a wiper arm (20; 20a), wherein the wiper arm (20; 20a) is fastened in a torque-proof manner on a wiper shaft (5) by means of a clamping piece (22; 22a), wherein a toothing region (15) is formed between the clamping piece (22; 22a) and the wiper shaft (5), wherein to form a clamping connection the clamping piece (22; 22a) cooperates with a clamping screw (27) which is arranged in a direction perpendicularly to the axis (2) of the wiper shaft (5), and wherein the wiper arm (20; 20a) is able to be fixed by means of the clamping piece (22; 22a) at differing distances from the vehicle window (1),
**characterized in that**
the clamping screw (27), in particular in an operating position of the wiper blade (10), in which the latter is aligned parallel to the vehicle window (1), is covered at least on its face sides by a covering element of the wiper arm (20; 20a).

2. The wiper device according to Claim 1,
**characterized in that**
the covering element is formed as a separate covering cap (40) pivotably arranged on the clamping piece (22), or by at least one covering region (60) of the wiper arm (22a) which is pivotable together with the wiper arm (22a).

3. The wiper device according to Claim 2,
**characterized in that**
the covering cap (40) or the at least one covering region (60) of the wiper arm (22a) for setting a defined vertical position of the wiper arm (20; 20a) on the wiper shaft (5) is pivotable into a mounting position in which the covering cap (40) or the at least one covering region (60) is arranged in abutting contact on the vehicle window (1).

4. The wiper device according to Claim 3,
**characterized in that**
the mounting position of the wiper arm (20; 20a) is defined by stop elements (43, 44; 62, 63), which delimit the pivoting angle of the covering cap (40) or of the wiper arm (20a).

5. The wiper device according to one of Claims 1 to 4
**characterized in that**
for the production of a contact force of the wiper blade (10) on the vehicle window (1) a tension spring (55) is provided, and that the tension spring (55) is fastened with a fastening section (57) on the clamping screw (27).

6. The wiper device according to one of Claims 1 to 5,
**characterized in that**
in the wiper shaft (5) a washing fluid tube (11; 11a) is provided for a washing fluid, which tube is connected hydraulically with the wiper blade (10).

7. The wiper device according to Claim 6,
**characterized in that**
the clamping piece (22) has fluid ducts (33) for supplying the washing fluid to the wiper blade (10).

8. The wiper device according to Claim 7,
**characterized in that**
the clamping piece (22) is closed by means of a covering element (30) which, with at least one recess (36) forms regions of the fluid ducts (33).

9. The wiper arm (20; 20a) for use on a wiper device (100; 100a) according to one of Claims 1 to 8.

10. A method for fastening a wiper arm (20; 20a) on a wiper shaft (5) using a wiper device (100; 100a) according to one of Claims 1 to 9, wherein the wiper arm (20; 20a) is positioned in a defined position on a toothing region (15) of the wiper shaft (5), and thereafter the wiper arm (20; 20a) is fixed on the wiper shaft (5) by forming a clamping connection on a clamping piece (22; 22a) by means of a clamping screw (27),
**characterized in that**
for positioning the wiper arm (20; 20a) on the toothing region (15), a covering cap (40) or the wiper arm (20a) is swivelled into a mounting position, in which the covering cap (40) or the wiper arm (20a) lies with at least one covering region (60) against the vehicle window (1), that in this position the clamping screw (27) is tightened, and that finally the covering cap (40) or the wiper arm (20a) is pivoted into an operating position, in which the clamping screw (27) is covered by the covering cap (40) or by the at least one covering region (60) of the wiper arm (20a).
